# EUROPÄISCHE PATENTSCHRIFT

(11) **EP 1 654 575 B1**
(45) Veröffentlichungstag und Bekanntmachung des Hinweises auf die Patenterteilung: **07.03.2007**
(21) Anmeldenummer: 04763198.1
(22) Anmeldetag: 13.07.2004
(51) Int. Cl.: G02B 6/43

(54) **MODULARES SYSTEM FÜR EINEN OPTISCHEN RÜCKWANDBUS**
MODULAR SYSTEM FOR AN OPTICAL REAR PANEL BUS
SYSTEME MODULAIRE POUR UN BUS DE FACE ARRIERE OPTIQUE

(30) Priorität: 01.08.2003 DE 10335036
(43) Veröffentlichungstag der Anmeldung: 10.05.2006
(73) Patentinhaber: SIEMENS AKTIENGESELLSCHAFT, 80333 München (DE)
(72) Erfinder: MAUL, Jürgen, 92237 Sulzbach-Rosenberg (DE); REISS, Herbert, 92256 Hahnbach (DE); STAUDT, Michael, 90518 Altdorf (DE); VÖLKEL, Thomas, 90518 Altdorf (DE)
(86) Internationale Anmeldenummer: PCT/EP2004/007738
(87) Internationale Veröffentlichungsnummer: WO 2005/012973

(56) Entgegenhaltungen:
- US-A- 4 856 091
- US-A- 5 500 523
- US-A1- 2002 030 809
- US-A1- 2002 181 863
- SAUTER G F: "GRADIENT-INDEX LENS OPTICAL BACKPLANE" APPLIED OPTICS, OPTICAL SOCIETY OF AMERICA,WASHINGTON, US, Bd. 33, Nr. 16, 1. Juni 1994 (1994-06-01), Seiten 3446-3453, XP000450238 ISSN: 0003-6935

## Beschreibung

Die vorliegende Erfindung betrifft ein modulares System. Insbesondere betrifft die Erfindung einen Rückwandwandbus gemäß dem Oberbegriff des Anspruchs 1.

Modulare Systeme bestehen aus einer Anzahl von Modulen, die über einen Rückwandbus, einer so genannten Backplane, miteinander in Verbindung stehen. Der Rückwandbus weist dazu eine Anzahl von Steckplätzen auf, an welche die einzelnen Module modular ansteckbar sind. Üblicherweise stellt der Rückwandbus über diese Steckplätze die Spannungsversorgung für die einzelnen Module bereit. Zudem sind die Steckplätze mit entsprechend geeigneten elektrischen oder optischen Mitteln so miteinander verbunden, dass die von einem der Module gesendeten Signale von anderen Modulen empfangen werden können und umgekehrt. Die gesendeten und empfangenen Signale enthalten dabei Informationen, beispielsweise eine Kennung zur Adressierung oder auch Daten zur Datenkommunikation zwischen den Modulen.

Aus der EP 0 237 236 ist bekannt, einen Rückwandbus mit einem Lichtwellenleiter für die Datenkommunikation zwischen den Modulen zu benutzen. Dazu weist der Lichtwellenleiter über seine Länge in bestimmten Abständen entsprechende Mittel auf, die Teile des im Lichtwellenleiter geführten Lichtes auskoppeln und den restlichen Teil des Lichtes durchlassen. Diese ausgekoppelten Lichtteile enthalten weiterhin die vollständige, in den Lichtsignalen transportierten, Informationen. Das ausgekoppelte Licht, und damit die Lichtsignale werden dann über weitere optische Elemente, wie beispielsweise Linsen, auf den einzelnen Modulen geführt. Durch diese Anordnung der Mittel im Lichtwellenleiter werden so immer wieder Teile des im Lichtwellenleiter verbleibenden Lichtes ausgekoppelt. Damit nimmt die Intensität des Lichtes gerade bei einer großen Anzahl von Steckplätzen immer weiter ab. Dies hat zum Nachteil, dass die in Ausbreitungsrichtung des Lichtes weiter entfernten Module, die in den ausgekoppelten Lichtsignalen enthaltenen Informationen mit immer weniger Lichtintensität empfangen. Dadurch verschlechtert sich das Signal- zu RauschVerhältnis mit zunehmender Zahl von Modulen immer weiter, wodurch es zu fehlerhafter Übertragung der Informationen kommen kann.

Die US-A-5500523 beschreibt ein modulares System entsprechend der Präambel des Anspruchs 1, wobei der Lichtwellenleiter aus einer kaskadierten Anordnung von GRIN-Linsen besteht und Prismen als Mittel zum Ein- und Auskoppeln der Lichtsignale verwendet werden.

Die US-A-2002/0181863 beschreibt einen optischen Bus mit Unterbrechungen, in die Module mit zwei 45° Spiegeln und weiteren Lichtwellenleitern so eingesteckt werden, dass ein Modul eine Unterbrechung des Busses überbrückt.

Die WO 88/08573 beschreibt auch ein modulares System mit einer Anzahl von Modulen, die auf einen Rückwandbus gesteckt sind. Über den Rückwandbus können die gesteckten Module entsprechend miteinander kommunizieren. Zusätzlich weist jedes der Module einen optischen Sender und einen optischen Emitter auf, die so angeordnet sind, dass im gesteckten Zustand der optische Sender eines Moduls immer dem optischen Empfänger des direkten Nachbarmoduls gegenüberliegt. Zur Adressierung der Module sendet dann das erste Modul über den Rückwandbus eine Kennung für eine mögliche gültige Adresse. Gleichzeitig aktiviert das erste Modul seinen optischen Sender. Über die freie Luftschnittstelle zwischen dem ersten und dem benachbarten zweiten Modul wird somit der optische Empfänger des zweiten Moduls beleuchtet und aktiviert. Der aktivierte optische Empfänger schaltet dann die, über den Rückwandbus übermittelte Kennung für die weitere Bearbeitung auf dem zweiten Modul frei. Nachdem dieses zweite Modul die Kennung der gültigen Adresse übernommen hat, aktiviert es seinen optischen Sender. Dieser beleuchtet wiederum über eine weitere Luftschnittstelle den optischen Empfänger des nachfolgenden dritten Moduls und so fort. Solch eine Reihenschaltung von Modulen zur Adressierung ist unter dem Begriff "daisy-chain" bekannt. Die in WO 88/08573 gezeigte Anordnung hat aber den Nachteil, dass zusätzlich zum Rückwandbus weitere optische Sender und Empfänger für die Adressierung notwendig sind.

Aufgabe der vorliegenden Erfindung ist deshalb einen Rückwandbus und ein entsprechendes Modul bereitzustellen, die auf einfache Art und Weise eine Datenkommunikation und Autoadressierung über ein gemeinsames Mittel ermöglichen. Ferner ist es die Aufgabe, ein entsprechendes modulares System bereitzustellen.

Diese Aufgabe wird gelöst durch den Rückwandbus mit den Merkmalen des Anspruchs 1.

Dadurch, dass der Lichtwellenleiter eines Rückwandbusses Unterbrechungen aufweist und in diese Unterbrechungen Mittel zum Ein- und Auskoppeln der steckbaren Module einfügbar sind, können im Lichtwellenleiter geführte Lichtsignale über die Mittel zu den gesteckten Modulen umgeleitet, das heißt aus dem Lichtwellenleiter ausgekoppelt werden. Insbesondere erkennt das Modul die in den umgeleiteten Lichtsignale enthaltenen Informationen, wie beispielsweise die Kennung zur Adressierung oder die Daten für die Datenkommunikation. Entsprechende vom Modul generierte Lichtsignale werden über die Mittel zum Ein- und Auskoppeln dem Lichtwellenleiter wieder zugeführt, das heißt in Ausbreitungsrichtung der ursprünglichen Lichtsignale in den Lichtwellenleiter eingekoppelt. Dadurch, dass die Unterbrechungen so angeordnet sind, dass einem Steckplatz auf dem Rückwandbus eine Unterbrechung zuordenbar ist, ist eine einfache Hintereinanderschaltung einer Anzahl von, auf einen Rückwandbus gesteckter, Module möglich. Somit können ohne weiteres gesteckte Module adressiert werden und anschließend über die gleichen Mittel, das heißt den Lichtwellenleiter, Daten für die Datenkommunikation austauschen. Dadurch sind keine separaten Mittel für die Adressierung und die Datenkommunikation notwendig.

Weitere vorteilhafte Ausführungen und bevorzugte Weiterbildungen der Erfindung sind den Unteransprüchen zu entnehmen.

Die vorliegende Erfindung sowie deren Vorteile sollen nun anhand der folgenden Figuren näher beschrieben werden. Es zeigen:
- FIG 1: eine mögliche Ausführungsform des modularen Systems mit einem Rückwandbus und drei Modulen,
- FIG 2: Flussdiagramme für den prinzipiellen Ablauf der Adressierung der Module

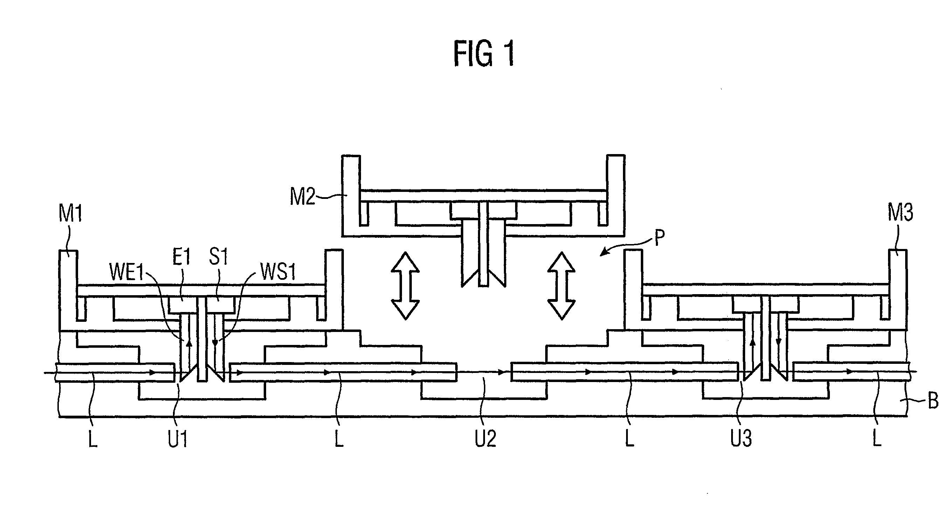

Der in Figur 1 dargestellte Teil eines modularen Systems weist einen Rückwandbus B mit einem Lichtwellenleiter L auf. In der hier vorliegenden Ausführungsform führt der Lichtwellenleiter L entsprechende Lichtsignale von der linken auf die rechte Seite des Rückwandbusses B. Somit ist die Ausbreitungsrichtung des geführten Lichtes für diesen Lichtwellenleiter L vorgegeben. Gemäß der vorliegenden Erfindung weist der Lichtwellenleiter L eine Anzahl von Unterbrechungen U1, U2 und U3 auf. Ist kein Modul gesteckt, wie beispielsweise bei der Unterbrechung U2, tritt das geführte Licht, respektive die Lichtsignale, an einer Grenzfläche zwischen Lichtwellenleiter L und Unterbrechung U2 aus dem Lichtwellenleiter aus, wird entsprechend der vorgegebenen Ausbreitungsrichtung die Unterbrechung U2 überwinden und an der anderen Grenzfläche wieder in den Lichtwellenleiter L eintreten. Um die Verluste, insbesondere Reflexionsverluste, an den Grenzflächen gering zu halten, sind vorzugsweise entsprechende Antireflexionsschichten auf diesen Grenzflächen aufgebracht.

Auf dem Rückwandbus B ist eine Mehrzahl von Steckplätzen, wie beispielsweise die in Figur 1 gezeigten Steckplätze P, vorgesehen. Die Steckplätze P sind so ausgebildet, dass eine stabile mechanische oder auch eine zusätzliche elektrische Verbindung zwischen Rückwandbus B und den darauf steckbaren Modulen M1, M2 und M3 besteht. Gemäß der vorliegenden Erfindung weisen die Module M1, M2 und M3 zusätzlich noch Mittel zum Ein- und Auskoppeln der Lichtsignale in und aus dem Lichtwellenleiter L auf. Sind, wie im vorliegenden Beispiel gezeigt, die Module M1 und M3 gesteckt, so sind die entsprechenden Mittel in die Unterbrechungen U1 und U3 eingefügt. Die im Lichtwellenleiter L geführten Lichtsignale werden dann beispielsweise am Modul M1 zu einem optischen Empfänger E1. Dieser wandelt das empfangene Lichtsignal für die weitere Verarbeitung auf dem Modul M1 in ein elektrisches Signal um. Zudem ist auf dem Modul ein optischer Sender S1 vorgesehen, der optische Lichtsignale generiert, die dann über die Mittel zum Ein- und Auskoppeln in den Lichtwellenleiter L des Rückwandbusses B einkoppelt werden. Dabei sind die Mittel zum Ein- und Auskoppeln vorzugsweise so ausgebildet, dass sie aus einem ersten (WE1) und zweiten (WS1) Lichtwellenleiterstück bestehen, die parallel zueinander angeordnet sind. In einer Ausbildung ist, so wie in Figur 1 gezeigt, zwischen den zwei parallel angeordneten Lichtwellenleiterstücken WE1 und WS1 zusätzlich noch ein Schild vorgesehen, dass die beiden Lichtwellenleiterstücke WE1 und WS1 optisch voneinander trennt. Beide Wellenleiterstücke weisen an einem Ende jeweils eine abgeschrägte Endfläche auf. Dabei sind die beiden Endflächen so ausgebildet bzw. angeordnet, dass sie die im Lichtwellenleiter L geführten Lichtsignale auskoppeln und anschließend wieder Lichtsignale in der Ausbreitungsrichtung einkoppeln. Am Beispiel des in Figur 1 gezeigten erstem Moduls M1 bedeutet das, dass das erste Lichtwellenleiterstück WE1 so in die Unterbrechung U1 des Lichtwellenleiters L hineinragt, dass die von links kommenden Lichtsignale an der Grenzfläche aus dem Lichtwellenleiter L austreten, anschließend in das erste Lichtwellenleiterstück WE1 eintreten, an dessen abgeschrägter Endfläche reflektiert und anschließend von ersten Lichtwellenleiterstück WE1 zum optischen Empfänger E1 des Moduls M1 geführt werden. Die abgeschrägte Endfläche ist so ausgebildet, dass die in das erste Lichtwellenleiterstück WE1 eintretenden Lichtsignale an dieser Endfläche total reflektiert werden. Entsprechend werden die vom optischen Sender S1 erzeugten Lichtsignale im zweiten Lichtwellenleiterstück WS1 geführt, an dessen abgeschrägten Endfläche reflektiert und am anderen Ende der Unterbrechung U1 in Ausbreitungsrichtung über die nächste Grenzfläche des Lichtwellenleiters L in diesen eingekoppelt. Das bedeutet, dass das auf dem Modul M1 generierte und nach der Unterbrechung U1 wieder in den Lichtwellenleiter L eingekoppelte Lichtsignal, in dem Lichtwellenleiter L die gleiche Ausbreitungsrichtung aufweist wie das vor der Unterbrechung U1 im Lichtwellenleiter L geführte ursprüngliche Lichtsignal. Die eingekoppelten Lichtsignale werden dann weiter über den Lichtwellenleiter L und die Unterbrechung U2 zur Unterbrechung U3 geführt. An der Unterbrechung U3 werden die Lichtsignale dann über die entsprechenden Mittel des gesteckten Moduls M3 ausgekoppelt und so weiter. Auf diese Art erhält man auf einfache Art und Weise eine Hintereinanderschaltung von mehreren Modulen M1 und M3, die in einem modularen System auf einen Rückwandbus B gesteckt sind. Entsprechend können dann mittels des Lichtwellenleiters L die Informationen über die Kennungen für die Autoadressierung und/oder Daten für die Datenkommunikation über das gleiche Mittel, nämlich den Lichtwellenleiter L, übertragen werden.

Die in Figur 1 gezeigte Ausführungsform erlaubt das Führen von Licht, respektive der in den geführten Lichtsignalen enthaltenen Informationen, in genau einer Ausbreitungsrichtung, nämlich von dem Modul M1 auf der linken Seite zu dem Modul M3 auf der rechten Seite. Für eine bidirektionale Übertragung von Lichtsignalen ist auf dem Rückwandbus B entsprechend ein zweiter Lichtwellenleiter gemäß der vorliegenden Erfindung und Module mit entsprechend weiteren Mitteln zum Ein- und Auskoppeln von Lichtsignalen aus diesem zweiten Lichtwellenleiter vorzusehen. Dadurch können Lichtsignale und damit Kennungen und Daten sowohl in die eine als auch in die andere Richtung geführt werden und damit die Module M1 und M3 in beiden Richtungen miteinander kommunizieren.

Die Unterbrechungen U1, U2 und U3 des Lichtwellenleiters L des modularen Systems sind vorzugsweise so ausgebildet, dass ihre Abmessungen in Ausbreitungsrichtung der Lichtsignale nur geringfügig größer sind als die Abmessungen der einfügbaren Mittel zum Ein- und Auskoppeln. Damit wird ein direkter Kontakt des Lichtwellenleiters L mit den entsprechenden Mitteln zum Ein- und Auskoppeln, gerade beim Einstecken oder Herausziehen der Module vermieden. Solche unbeabsichtigten mechanischen Kontakte können die Oberflächen der Lichtwellenleiter L, WE1 oder WS1, insbesondere die Grenzflächen, beschädigen, wodurch sich auf längere Sicht die Transmissionseigenschaften und damit die Intensität der geführten Lichtsignale verringert. Auf der anderen Seite sollten die Abmessungen auch nicht zu groß gewählt werden, da es dann in den frei bleibenden Bereichen der Unterbrechungen U1, U2 und U3 zu zusätzlichen nicht notwendigen Dämpfungen kommt.

Durch die gemäß der vorliegenden Erfindung bewirkte Reihenschaltung von Modulen M1, M2, M3,... werden auf einem Modul die aus dem Lichtwellenleiter L ausgekoppelten Lichtsignale von einem optischen Empfänger in entsprechende elektrische Signale umgewandelt und abhängig von diesen elektrischen Signalen dann ein optischer Sender gesteuert. Somit können beispielsweise die vom Modul M1 empfangenen Lichtsignale und die darin enthaltenen Informationen vom optischen Empfänger E1 in elektrische Signale umgewandelt und anschließend verstärkt werden. Diese verstärkten elektrischen Signale werden dann im Sender S1 wieder in Lichtsignale umgewandelt, anschließend in den Lichtwellenleiter L eingekoppelt und von diesem zum nächsten gesteckten Modul M3 geführt. Somit ist auch bei einer hohen Anzahl von gesteckten Modulen gewährleistet, dass auch noch beim letzten Modul in der Reihe die Intensität der Lichtsignale genügend hoch ist.

Ist die Höhe der Signalverstärkung und die Dämpfung für die geführten Lichtsignale in den Lichtwellenleitern L, WE1, WS1, ... und den Unterbrechungen U1, U2, U3, ... bekannt, kann mit Hilfe einer Intensitätsmessung an nachfolgenden Modulen der Reihe erkannt werden, wie viele Module nicht gesteckt sind. Wird zudem noch ein Dämpfungselement mit einer definierten Dämpfung in die Unterbrechungen, die nicht durch Module belegt sind, eingefügt, kann die Bestimmung von freien Steckplätzen anhand der Intensitätsmessung noch sicherer erfolgen.

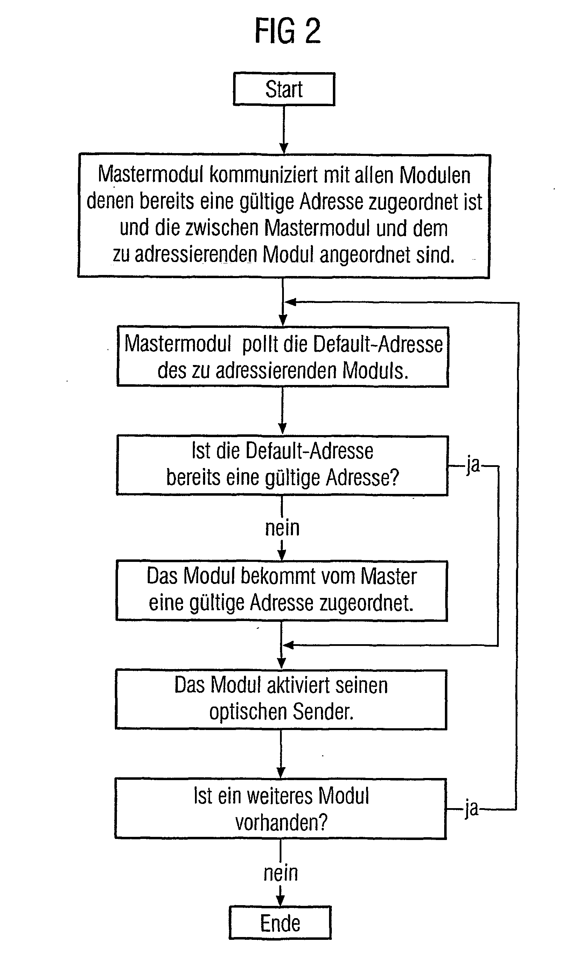

Modulare Systeme, wie beispielsweise Automatisierungssysteme bestehen aus einer Anzahl von Modulen, die jeweils vordefinierte Aufgaben bzw. Funktionen wahrnehmen. Dabei wird im Allgemeinen eines der Module, beispielsweise eine Kopfbaugruppe, der Master für die anderen gesteckten Module sein. Über den Rückwandbus werden alle Module mit entsprechenden Spannungen versorgt. Damit die Module untereinander zusammenwirken, muss während der Projektierung allen Modulen des Automatisierungssystems eine Adresse zugewiesen werden. Während des Betriebes überprüft der Master dann zuerst, ob den einzelnen Modulen gültige Adressen zugewiesen sind, um sie anschließend anhand dieser Kennung entsprechend mit Daten zu versorgen oder zu steuern. Der prinzipielle Ablauf der Adressierung soll nun anhand des in Figur 2 gezeigten Flussdiagramms näher beschrieben werden. Der gezeigte Ablauf ist sowohl anwendbar bei einem Neustart, das heißt beim Anlauf des modularen Systems, aber auch beim Tausch oder Hinzufügen von Modulen. Dabei wird davon ausgegangen, dass jedem Modul nach Spannungswiederkehr, eine Default-Adresse zugeordnet sowie dessen optischer Sender deaktiviert ist. Der Master wird in regelmäßigen Abständen über den Lichtwellenleiter L mit den Modulen kommunizieren und überprüfen, ob ihnen eine gültige Adresse zugeordnet ist. Ist ein Modul erkannt, das die Reihe unterbricht, das heißt dessen optischer Sender deaktiviert ist, pollt der Master die Default-Adresse dieses Moduls. Ist die Default-Adresse bereits eine gültige Adresse, weil beispielsweise diese Adresse an kein anderes Modul vergeben ist, wird der optische Sender dieses Moduls aktiviert. Ist dagegen die Default-Adresse keine gültige Adresse, so bekommt dieses Modul vom Mastermodul über die im Lichtwellenleiter geführten Lichtsignale eine gültige Adresse zugeordnet. Und dessen optische Sender wird aktiviert. Damit kann der Master dann über den Lichtwelleleiter L, das erste Lichtwellenleiterstück WE1, den optischen Empfänger E1 und den damit elektrisch verbundenen optischen Sender S1, dem zweiten Lichtwellenleiterstück WS1 und dem Lichtwellenleiter L mit dem nachfolgenden Modul kommunizieren. Ist ein weiteres Modul vorhanden, das auch die Reihe unterbricht, wird wiederum für dieses die Default-Adresse gepollt und so fort. Damit ist es möglich, einzelne oder auch mehrere neu zugeschaltete Module einzubinden. Beim Neustart des Systems besitzen alle Module eine Default-Adresse, so dass hier dann die Schritte auf das erste, dem Master folgende Modul, vorgenommen werden müssen. Ist allen Modulen eine gültige Adresse zugewiesen, kann die Adressierung beendet werden und mit der Datenkommunikation beispielsweise zum Steuern der Module begonnen werden. Vorzugsweise gehen dazu alle Module in einen Parallelmodus über, das heißt alle Module empfangen nahezu gleichzeitig Daten, aber nur das Modul, das die den Daten zugeordnete Adresse besitzt, antwortet oder führt aus.

## Patentansprüche

1. Modulares System mit
- einem Rückwandbus (B), mit einer Mehrzahl von Steckplätzen (P) an die Module (M1, M2, M3,...) steckbar sind und mit einem Lichtwellenleiter (L) zum Führen von Lichtsignalen, wobei der Lichtwellenleiter (L) in Ausbreitungsrichtung der Lichtsignale eine Anzahl von Unterbrechungen (U1,U2,U3,...) aufweist die so angeordnet sind, dass einem Steckplatz (P) eine Unterbrechung -(U1, U2, U3,...) zugeordnet ist;
- einer Anzahl von, auf Steckplätze (P) des Rückwandbusses (B) gesteckter Module (M1,M2,M3,...), wobei die Module (M1,M2,M3,...) Mittel zum Ein- und Auskoppeln der im Lichtwellenleiter (L) geführten Lichtsignale aufweisen;
-- wobei die Unterbrechungen (U1,U2,U3,...) des Lichtwellenleiters (L) so ausgebildet sind, dass deren Abmessungen in Ausbreitungsrichtung der Lichtsignale nur geringfügig größer sind als die Abmessungen der einsteckbaren Mittel zum Ein- und Auskoppeln
**dadurch gekennzeichnet, dass**
- die Mittel zum Ein- und Auskoppeln aus einem ersten (WE1) und einem zweiten (WE2) Lichtwellenleiterstück bestehen; und
-- ein Ende des ersten Lichtwellenleiterstückes (WE1) eine abgeschrägte Endfläche aufweist, die so ausgebildet ist, dass sie die im Lichtwellenleiter (L) in Ausbreitungsrichtung geführten Lichtsignale über die abgeschrägte Endfläche vollständig aus dem Lichtwellenleiter (L) auskoppelt; und
-- ein Ende des zweiten Lichtwellenleiterstückes (WS1) eine abgeschrägte Endfläche aufweist, die so ausgebildet ist, dass sie die von einem auf dem Modul (M1) angeordneten optischen Sender (S1) gesendeten Lichtsignale über die abgeschrägte Endfläche in der gleichen Ausbreitungsrichtung in den Lichtwellenleiter (L) einkoppelt.

2. Modulares System nach Anspruch 1,
**dadurch gekennzeichnet, dass**
Dämpfungselemente zum Einfügen in die Unterbrechungen (U1,U2,U3,...) vorgesehen sind, wobei die Abmessungen der Dämpfungselemente geringfügig kleiner sind als die Abmessungen der Unterbrechungen und wobei die Dämpfungselemente eine definierte Dämpfung für die Lichtsignale aufweisen.

3. Modulares System nach Anspruch 1 oder 2,
**dadurch gekennzeichnet, dass**
das modulare System ein Automatisierungssystem ist, wobei eines der gesteckten Module ein Master für die anderen gesteckten Module ist, d.h. der Master dient zur Kommunikation und Überprüfung über den Lichtwellenleiter (L), ob den anderen Modulen eine gültige Adresse zugeordnet ist.

## Claims

1. Modular system comprising
- a backplane (B) having a plurality of slots (P) into which modules (M1,M2,M3,...) can be plugged, and having an optical waveguide (L) for guiding optical signals,
the optical waveguide (L) having, in the propagation direction of the optical signals, a plurality of interruptions (U1,U2, U3,...) which are arranged in such a way that a slot (P) is assigned an interruption (U1, U2, U3,...);
- having a number of modules (M1,M2,M3,...) plugged into slots (P) of the backplane (B), the modules (M1,M2,M3,...) having means for coupling the optical signals guided in the optical waveguide (L) in and out;
-- the interruptions (U1,U2,U3,...) of the optical waveguide (L) being embodied in such a way that their dimensions in the propagation direction of the optical signals are only slightly larger than the dimensions of the insertable means for coupling light in and out,
**characterised in that**
- the means for coupling light in and out consist of a first optical waveguide section (WE1) and a second optical waveguide section (WE2); and
-- one end of the first optical waveguide section (WE1) has an oblique end face embodied in such a way that it completely couples out the optical signals guided in the optical waveguide (L) in the propagation direction from the optical waveguide (L) via the oblique end face; and
-- one end of the second optical waveguide section (WS1) has an oblique end face embodied in such a way that it couples the optical signals transmitted by an optical transmitter (S1) disposed on the module (Ml) into the optical waveguide (L) in the same propagation direction via the oblique end face.

2. Modular system as claimed in claim 1,
**characterised in that**
attenuating elements are provided for inserting in the interruptions (U1,U2,U3,...), the dimensions of the attenuating elements being slightly smaller than the dimensions of the interruptions and the attenuating elements having a defined attenuation for the optical signals.

3. Modular system as claimed in claim 1 or 2,
**characterised in that**
the modular system is an automation system, with one of the inserted modules being a master for the other inserted modules, i.e. the master is used for communication and for checking via the optical waveguide (L) whether a valid address has been assigned to the other modules.

## Revendications

1. Système modulaire comprenant
- un bus de paroi arrière (B), ayant une pluralité d'emplacements d'enfichage (P) dans lesquels des modules (M1,M2,M3,...) sont enfichables et une fibre optique (L) pour le guidage de signaux lumineux, la fibre optique (L) comportant dans le sens de propagation des signaux lumineux un nombre d'interruptions (U1,U2,U3,...) qui sont disposées de façon à ce qu'une interruption (U1,U2,U3,...) soit associée à un emplacement d'enfichage ;
- un nombre de modules (M1,M2,M3,...), enfichés sur les emplacements d'enfichage (P) du bus de paroi arrière (B), les modules (M1,M2,M3,...) comportant des moyens pour injecter et extraire des signaux lumineux guidés dans la fibre optique (L) ;
-- les interruptions (U1,U2,U3,...) de la fibre optique (L) étant conçues de façon à ce que leurs dimensions dans le sens de propagation des signaux lumineux ne soient que légèrement supérieures à la dimension des moyens enfichables pour l'injection et l'extraction
**caractérisé en ce que**
- les moyens d'injection et d'extraction consistent en un premier (WE1) et en un deuxième (WE2) tronçon de fibre optique ; et
-- une extrémité du premier tronçon de fibre optique (WE1) comporte une surface d'extrémité chanfreinée, qui est conçue de façon à extraire totalement de la fibre optique (L) les signaux lumineux guidés dans le sens de propagation dans la fibre optique (L), par l'intermédiaire de la surface chanfreinée ; et
-- une extrémité du deuxième tronçon de fibre optique (WS1) comporte une surface d'extrémité chanfreinée, qui est conçue de façon à injecter dans le même sens de propagation dans la fibre optique (L) les signaux lumineux émis par un émetteur optique (S1) disposé sur le module (Ml), par l'intermédiaire de la surface d'extrémité chanfreinée.

2. Système modulaire selon la revendication 1,
**caractérisé en ce que** des éléments atténuateurs sont prévus pour être insérés dans les interruptions (U1,U2,U3,...), les dimensions des éléments atténuateurs étant légèrement inférieures à la dimension des interruptions et les éléments atténuateurs ayant une atténuation définie des signaux lumineux.

3. Système modulaire selon la revendication 1 ou 2,
**caractérisé en ce que** le système modulaire est un système d'automatisation, l'un des modules enfichés étant un maître pour les autres modules enfichés, c'est à dire que le maître sert à la communication et à la vérification par l'intermédiaire de la fibre optique (L), si une adresse valable est attribuée aux autres modules.
